# EUROPÄISCHE PATENTSCHRIFT

(11) **EP 0 461 331 B1**
(45) Veröffentlichungstag und Bekanntmachung des Hinweises auf die Patenterteilung: **15.12.1993**
(21) Anmeldenummer: 90810431.8
(22) Anmeldetag: 14.06.1990
(51) Int. Cl.: F04B 49/00, F16K 31/06

(54) **Dreiweg-Sitzventil**
Three way valve
Clapet à trois voies

(43) Veröffentlichungstag der Anmeldung: 18.12.1991
(73) Patentinhaber: GEBRÜDER SULZER AKTIENGESELLSCHAFT, CH-8401 Winterthur (CH)
(72) Erfinder: Gattolliat, André, CH-1212 Grand-Lancy (CH); Ramillon, Jean-Pierre, CH-1258 Perly (CH)

(56) Entgegenhaltungen:
- US-A- 3 043 336
- US-A- 4 631 923

## Beschreibung

Die Erfindung betrifft ein Dreiweg-Sitzventil entsprechend dem Oberbegriff des Patentanspruchs 1.

Ein aus der US-A-3,043,336 bekanntes Ventil der genannten Art, welches zur Verwendung in hydraulischen Steuersystemen vorgesehen ist, enthält zwei kolbenartige Ventilkörper, die in einem elektromagnetisch betätigbaren Stellglied axial beweglich gelagert und durch eine zwischen ihnen angeordnete Feder unter Vorspannung zwischen zwei an den einander entgegengesetzten Enden des Stellglieds vorgesehenen Anschlägen gehalten sind. Die Ventilkörper sind mit kegelförmigen Endpartien ausgeführt, welche je über das betreffende Ende des Stellglieds gegen den zugehörigen Ventilsitz vorstehen. Beim bekannten Ventil sind die beiden Ventilkörper zwangsläufig mit dem Stellglied so gekoppelt, dass jeweils ein Ventilkörper in einer Offenstellung und der andere Ventilkörper in Schliessstellung gehalten ist, wobei in der Koppelung zwischen den beiden Ventilkörpern ein Spiel vorgesehen ist, durch welches beim Verstellen des in Offenstellung befindlichen Ventilkörpers gegen seine Schliessstellung der andere Ventilkörper in Schliessstellung gehalten werden soll, um ein entsprechend verzögertes, schlagartiges Abheben dieses Ventilkörpers von seinem Sitz zu ermöglichen. Durch das bekannte, für hydraulische Anwendungen bestimmte Ventil, welches eine relativ aufwendige konstruktive Ausbildung der Ventilkörper und des Stellglieds erfordert, kann jeweils die Zufuhr von Druckflüssigkeit in das Ventilgehäuse gesperrt oder freigegeben werden.

Der Erfindung liegt die Aufgabe zugrunde, ein Ventil der eingangs genannten Art in einer vereinfachten, für einen weiteren Anwendungsbereich geeigneten Ausführung zu schaffen, die es in bestimmten Anlagen gestattet, mit dieser Ausführung zwei Zweiwegventile und ein automatisches Rückschlagventil zu ersetzen.

Diese Aufgabe wird erfindungsgemäss durch die im kennzeichnenden Teil des Patentanspruchs 1 angegebenen Merkmale gelöst.

Beim erfindungsgemäss ausgeführten Ventil gestattet die zwischen den beiden Ventiltellern vorgesehene Koppelung, dass bei Nichtbetätigung des Stellglieds der erste Ventilteller in Offenstellung und der zweite Ventilteller zwangsläufig in Schliessstellung gehalten wird, während bei Betätigung des Stellglieds der erste Ventilteller in die Schliessstellung bewegt wird und der zweite Ventilteller entsprechend den anfallenden Drücken seine Schliessstellung beibehalten oder sich frei in eine Offenstellung verstellen kann.

Ausgestaltungen der Erfindung sind in den abhängigen Patentansprüchen angegeben.

Die nachfolgenden Zeichnungen stellen schematisch Ausführungsbeispiele des erfindungsgemässen Ventils dar. Es zeigen:
- Fig. 1: ein Schnittbild der Seitenansicht einer ersten Ausführungsform;
- Fig. 2: ein Schnittbild der Seitenansicht einer zweiten Ausführungsform;
- Fig. 3: ein Schnittbild der Seitenansicht einer weiteren Ausführungsform.

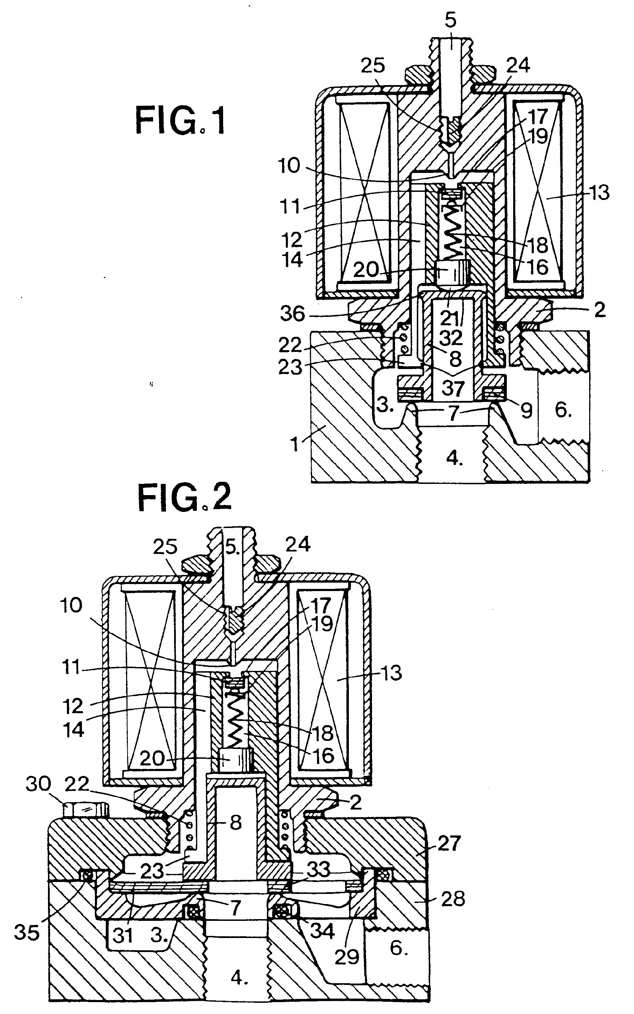

In der Fig. 1 besteht das Ventilgehäuse aus den Gehäuseteilen 1 und 2, die miteinander verschraubt sind und miteinander eine Gehäusekammer 3 bilden.

Im Gehäuseteil 1 besteht ein Durchgang 4 mit Anschluss für ein Gas mit relativ niedrigem Druck, z.B. für Erdgas mit einem Druck von weniger als 200 mbar. In diesen Durchgang 4 ist ein Gewinde für die Verschraubung einer nicht gezeigten Gaszulieferleitung geschnitten. Im Gehäuseoberteil 2 besteht ebenfalls ein Durchgang 5 mit einem Gasanschluss zur Gehäusekammer 3, der unter einem höheren Anschlussdruck steht, und schliesslich besteht von der Gehäusekammer 3 noch ein Verbraucheranschluss mit Durchgang 6, in den ein Anschlussgewinde geschnitten ist.

Der Durchgang 4 zur Gehäusekammer 3 endet mit einem Sitz 7, der durch einen Ventilteller 8, welcher einen Dichtring 9 trägt, verschlossen wird. Der Durchgang 5 endet mit einem Sitz 10, dessen freier Durchgang wesentlich kleiner als der vom Sitz 7 ist und der durch einen Ventilteller 11 verschlossen werden kann, welcher in einem magnetisierbaren Anker 12 gelagert ist, wobei dieser Anker 12 durch eine Magnetkraft, wie sie durch die Erregung einer Magnetspule 13 entsteht, nach oben verschoben wird. Der Anker 12 gleitet in einer zylindrischen Bohrung des Gehäuseoberteils 2 und weist eine Längsnut 14 auf, um eine Verbindung zwischen dem oberen Teil dieser Bohrung und der restlichen Gehäusekammer 3 zu schaffen.

Innerhalb des Ankers 12 befindet sich ein zylindrischer Hohlraum 16, der mit einer Innenschulter 17 nach oben endet, die den Ventilteller 11 im Anker 12 zurückhält. Der Ventilteller 11 wird durch eine Feder 18 mit Kappe 19 nach oben gestossen, wobei sich die Feder auf der unteren Seite auf einem Verschlussstück 20 abstützt, das den zylindrischen Hohlraum 16 abschliesst. Die untere bombierte Fläche 21 des Verschlussstückes 20 hat die Aufgabe, mit einem Uebertragungsteil 32 des Ventiltellers 8 zusammen zu wirken, wobei dieser Teil 32 zylindrisch ist und in einem passenden Hohlraum des Ankers 12 läuft. Der Anker 12 wird nach unten, d.h. in Oeffnungsrichtung vom Sitz 10 durch eine Feder 22 belastet, die sich einerseits auf dem Gehäuseoberteil 2 und andererseits auf einem Kragen 23 am Fuss des Ankers 12 abstützt.

Wie Fig. 1 zeigt, bildet der Uebertragungsteil 32 am oberen äusseren Rand des Ventiltellers 8 eine wulstartige Abstützung 36 im Hohlraum des Ankers 12, während der Hohlraum unten mit einem Wulst 37 abschliesst, der im Zusammenwirken mit der Abstützung 36 verhindert, dass der Ventilteller 8 während der Montage vollständig aus dem Ankerhohlraum herausfällt. Diese Anordnung ergibt eine Kopplung mit Spiel zwischen den Ventiltellern 8 und 11 und erlaubt dem Ventilteller 8, gegen seinen Sitz 7 zu schliessen, wenn der Ventilteller 11 gegen seinen Sitz 10 schliesst.

Das hier beschriebene Ventil ist dazu vorgesehen, ein gasförmiges Medium durch die Durchgänge 4 und 6 in einen Puffertank zu bringen, von welchem das Medium angesaugt und auf einen höheren Druck in der Grössenordnung von 200 bar gebracht wird, mit dem Zweck seiner Weiterverarbeitung, wie z.B. des Ladens von Hochdruckspeichern. Das Hochdruckgas wird am Durchgang 5 vorbeigeführt, der eine Gewindebohrung 25 mit Regulierschraube 24 für den Gasdurchtritt aufweist.

Mit dem Einschalten des Kompressors wird das Ventil erregt und der Anker 12 nimmt die obere Endlage ein, derart, dass der Sitz 10 durch den Ventilteller 11 verschlossen ist. Sobald der ansaugende Kompressor den Druck im Durchgang 6 auf ein tieferes Niveau als im Durchgang 4 abfallen lässt, hebt der Ventilteller 8 ab, um dem Gas den Weg zum Durchgang 6 und zum Pufferspeicher freizugeben. Für das Abschalten des Kompressors ist es vorteilhaft, zunächst den Druck in seiner Austrittsleitung, die in Verbindung mit Durchgang 5 steht, abzusenken. Die Erregung der Magnetspule 13 wird unterbrochen und der Anker 12 wird durch die Feder 22 nach unten gestossen. Sobald der Ventilteller 11 den Sitz 10 freigibt, steigt der Druck in der Gehäusekammer 3 an, um über das Verschlussstück 20 den Ventilteller 8 gegen den Sitz 7 wie ein Rückschlagventil zu schliessen. Die Gaszulieferung ist nun unterbrochen, während sich das unter höherem Druck stehende Gas über den Sitz 10 bis zur Gehäusekammer 3 und weiter in den Pufferspeicher ausbreitet, wobei sein Fluss durch den Widerstand der Regulierschraube 24 gebremst wird.

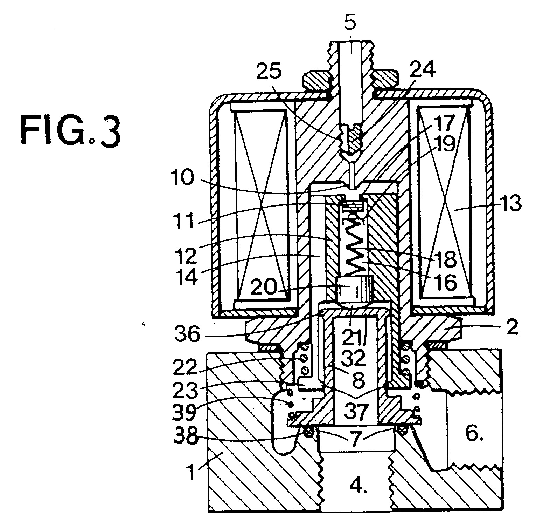

Der Pufferspeicher weist ein wesentlich grösseres Volumen als die Hochdruckversorgungsleitung auf, so dass der Ausgleichsdruck einen wesentlich tieferen Wert, z.B. in der Grössenordnung von 3 bar, annimmt. Mit dem nächsten Kompressorstart wird Sitz 10 über den Anker 12 geschlossen und der Ausgleichsdruck in Durchlass 6 baut sich soweit ab, bis der Druck im Durchlass 4 höher ist und den Ventilteller 8 abhebt. Damit ist sichergestellt, dass praktisch keine Rückströmung in das Versorgungsnetz an Durchlass 4 erfolgt. In der Ausführungsform nach Figur 3 wird der Gleitreibung zwischen dem abhebenden Anker 12 und dem Ventilteller 8 zusätzlich Rechnung getragen, indem im Sitz 7 ein vorstehender O-Ring 38 aus Weichelastomer eingelassen ist, gegen den der Ventilteller 8 durch ein zusätzliches Federelement 39 angedrückt ist. Diese Eigenschaft ein dosiertes sperrendes Gaspolster aufzubauen ist für die Handhabung aller Gase interessant, die nicht mit der Atmosphäre in Kontakt kommen dürfen, aber sie ist ebenso nützlich, wenn es sich nur um Luft handelt.

Die Ausführungsform nach Fig. 2 unterscheidet sich nur geringfügig von der in Fig. 1 und die mit der Fig. 1 gemeinsamen Elemente tragen die gleichen Referenznummern.

In dieser Ausführung ist das Gehäuseunterteil aus drei Teilen 27, 28, 29 zusammengesetzt und mit Schrauben 30 zusammengehalten. Die Gehäuseteile 27 und 29 bilden miteinander eine kreisförmige Innennut, in der eine Membran 31 mit ihrem äusseren Rand aufliegt. Die gleiche Membran bildet einen Innenring 33, der sich leicht in axialer Richtung zwischen dem Venteilteller 8 und seinem Sitz 7 verschieben lässt und zwischen diesen beiden dichtet. Der Ventilsitz 7 ist in diesem Fall im Gehäuseteil 29 abgestützt. Der Ventilteller 8 gleitet nur noch in einer Führung des Ankers 12 und wird durch den Ankerunterteil mit dem Kragen 23 in Richtung von Sitz 7 gepresst. O-Ringe 34 und 35 dichten statisch zwischen den Gehäuseteilen 27, 28 und 29.

Diese Konstruktion hat den Vorteil, dass man das Ventiloberteil mit den Gehäuseteilen 27 und 29 vormontieren kann. Auf diese Weise sind die empfindlichen Ventilteile, insbesondere der Sitz 7 und die Membran, geschützt und es besteht keine Beschädigungsgefahr bis zur endgültigen Montage auf dem Unterteil 28. Die vormontierte Einheit zeigt zwei Teile 27 und 29, die auch durch ein Einzelteil ersetzbar sind, das mit Schlitz zur Aufnahme vom Rand der Membran und das mit einer grösseren Verschraubung zum Gehäusoberteil 2 versehen ist, um die Membran zu montieren.

Nach einer weiteren, nicht dargestellten Ausführungsform kann im Gehäuse 2 eine Führungsfläche für eine Gleitfläche des Ventiltellers 8 vorgesehen sein wie angegeben im Anspruch 5.

## Patentansprüche

1. Dreiweg-Sitzventil, das ein Ventilgehäuse (1, 2) mit drei Durchgängen (4, 5, 6) zu einer Gehäusekammer (3) enthält, wobei die Verbindung von zwei Durchgängen (4, 5) mit der Gehäusekammer (3) durch zwei Ventilkörper gesteuert wird, die jeweils gegen einen Ventilsitz (7, 10) wirken, und wobei Mittel vorgesehen sind, um die Verstellung der Ventilkörper zu steuern, welche Mittel ein Stellglied und eine Koppelung mit Spiel zwischen den Ventilkörpern enthalten, durch welche bei Offenstellung eines der Ventilkörper der andere Ventilkörper eine Schliessstellung einnimmt, dadurch gekennzeichnet, dass die Ventilkörper durch Ventilteller (8, 11) gebildet sind, dass ein einziger, erster Ventilteller (11) mit dem Stellglied verstellbar verbunden ist, und dass der andere, zweite Ventilteller (8) unabhängig vom ersten Ventilteller (11) unter dem Einfluss der in der Gehäusekammer (3) und in den Durchgängen (4, 6) herrschenden Drücke des Fluids zwischen der Schliessstellung und einer Offenstellung bewegbar ist, sobald sich der erste Ventilteller (11) in Schliessstellung befindet.

2. Ventil nach Anspruch 1 mit elektromagnetischer Betätigung, bei dem das Stellglied durch einen den ersten Ventilteller (11) tragenden ferromagnetischen Anker (12) gebildet ist, welcher im Ventilgehäuse gleitend angebracht ist, dadurch gekennzeichnet, dass der zweite Ventilteller (8) eine axiale Führungsstrecke aufweist, und dass die beiden Ventilteller (8, 11) auf der Achse für die Verschiebung des magnetisierten Ankers (12) zentriert sind.

3. Ventil nach Anspruch 2, dadurch gekennzeichnet, dass zur Unterstützung der Schliessbewegung des zweiten Ventiltellers (8) gegen den Sitz (7) ein Federelement (39) vorgesehen ist, das sich am Ventilgehäuse (1, 2) abstützt.

4. Ventil nach Anspruch 2, dadurch gekennzeichnet, dass der zweite Ventilteller (8) gegenüber dem Anker (12) eine Gleitfläche aufweist, um eine axiale Führung des Ventiltellers (8) durch den Anker zu erhalten.

5. Ventil nach Anspruch 2, dadurch gekennzeichnet, dass der zweite Ventilteller (8) eine Gleitfläche gegenüber einer Führungsfläche des Gehäuses aufweist.

6. Ventil nach Anspruch 4, dadurch gekennzeichnet, dass der Anker (12) auf einer Seite eine zylindrische Bohrung aufweist, in der ein zylindrischer Teil des zweiten Ventiltellers (8) gleitend geführt ist.

7. Ventil nach Anspruch 6, dadurch gekennzeichnet, dass der zweite Ventilteller (8) einen ringförmigen Rand zu einem Kragen (23) des Ankers (12) hin aufweist, und dass eine Hülse des Ankers einen axialen Hohlraum bildet, derart, dass in der Offenstellung des ersten Ventiltellers (11) der Kragen (23) sich auf dem ringförmigen Rand des zweiten Ventiltellers (8) abstützt, um diesen in die Schliessstellung zu zwingen.

8. Ventil nach Anspruch 4 oder 5, in welchem ein gasförmiges Medium durch den ersten Ventilteller (11) gesteuert wird, wobei dieses Medium einen höheren Druck aufweist als ihn das zum zweiten Ventilteller (8) gesteuerte Medium besitzt, dadurch gekennzeichnet, dass der Durchmesser des Sitzes (10) für den ersten Ventilteller (11) kleiner ist als der Durchmesser des Sitzes (7) für den zweiten Ventilteller (8).

9. Ventil nach Anspruch 8, dadurch gekennzeichnet, dass der Durchgang (5) für das unter Hochdruck stehende Medium Mittel (24) aufweist, um den Fluss dieses Mediums zu bremsen.

10. Ventil nach Anspruch 2, dadurch gekennzeichnet, dass eine Membran (31) aus Elastomer mit dem Ventilgehäuse verbunden ist, und eine ringförmige Fläche (33) zwischen dem zweiten Ventilteller (8) und seinem Sitz (7) zur Verfügung stellt, die sich leicht in axialer Richtung verschieben lässt und Dichtheit zwischen den beiden gewährleistet.

11. Ventil nach Anspruch 10, dadurch gekennzeichnet, dass der Ventilkörper ein erstes Gehäuseteil (28) aufweist, das zwei (4, 6) der drei Durchgänge enthält und das Befestigungsmittel (30) aufweist, um dieses Gehäuseteil (28) mit zwei weiteren Gehäuseteilen (27, 29) zu verbinden, welche eine ringförmige Auskehlung bilden, in der der Rand der Membran (31) gefangen ist, wobei das eine Gehäuseteil (29) den Sitz (7) des zweiten Ventiltellers (8) trägt und die O-Ringe (34, 35) abstützt, um jeden der beiden Durchgänge (4, 6) für sich abzudichten.

12. Ventil nach Anspruch 2, dadurch gekennzeichnet, dass ein vorstehender Ring (38) aus Elastomer in den Sitz (7) eingelassen ist, der eine ringförmige Dichtfläche zum zweiten Ventilteller (8) aufweist.

13. Ventil nach Anspruch 4, dadurch gekennzeichnet, dass Haltemittel mit Axialspiel zwischen dem Anker und dem zweiten Ventilteller (8) vorgesehen sind.

## Claims

1. A three-way seated valve comprising a body (1, 2) having three passages (4, 5, 6) extending to a chamber (3), communication from two passages (4, 5) to the chamber (3) being controlled by two valve members each co-operating with a valve seat (7, 10), means being provided to control the movement of the valve members, such means comprising an actuating element and a connection with backlash between the valve members, the connection ensuring that when one of the valve members is in the open position the other valve member occupies a closed position, characterised in that the valve members are valve disks (8, 11), in that a single first valve disk (11) is adjustably connected to the actuating element, and in that the other second valve disk (8) is movable, independently of the first valve disk (11), in response to the pressures of the fluid in the chamber (3) and the passages (4, 6), between the closed position and an open position as soon as the first valve disk (11) is in the closed position.

2. An electromagnetically operated valve according to claim 1, in which the actuating element is formed by a ferromagnetic armature (12) received slidingly in the valve body and supporting the first valve disk, characterised in that the second valve disk (8) has an axial guide section and the two disks (8, 11) are centred on the axis for the displacement of the magnetised armature (12).

3. A valve according to claim 2, characterised in that the closing movement of the second valve disk (8) towards its seat (7) is boosted by a spring element (39) which bears on the body (1, 2).

4. A valve according to claim 2, characterised in that the second valve disk (8) has a slideway opposite the armature (12) for axial guidance of the valve disk (8) thereby.

5. A valve according to claim 2, characterised in that the second valve disk (8) has a slideway opposite a guideway of the body.

6. A valve according to claim 4, characterised in that the armature (12) is formed at one end with a cylindrical bore in which a cylindrical part of the second valve disk (8) slides.

7. A valve according to claim 6, characterised in that the second valve disk (8) has an annular edge towards a collar (23) of the armature (12) and a collar of the armature bounds an axial cavity so that when the first valve disk (11) is open the collar (23) bears on the annular edge of the second valve disk (8) to force the same into its closed position.

8. A valve according to claim 4 or 5 in which a gaseous medium is controlled by the first valve disk (11), such medium being at a higher pressure than the medium controlled towards the second disk (8), characterised in that the diameter of the seat (10) for the first valve disk (11) is smaller than the diameter of the seat (7) for the second disk (8).

9. A valve according to claim 8, characterised in that the passage (5) for the high-pressure medium has means (24) for retarding the flow thereof.

10. A valve according to claim 2, characterised in that a diaphragm (31) made of an elastomer is connected to the valve body and provides an annular surface (33) between the second valve disk (8) and its seat (7), such surface being really displaceable axially and ensuring sealing tightness between the two.

11. A valve according to claim 10, characterised in that the body has a first part (28) having two (4, 6) of the three passages, the part (28) having securing means (30) to connect such part (28) to two other body parts (27, 29) bounding an annular recess receiving the edge of the diaphragm (31), the casing part (29) carrying the seat (7) of the second valve disk (8) and supporting the O-rings (34, 35) in order to seal each of the two passages (4, 6) independently.

12. A valve according to claim 2, characterised in that a projecting ring (38) made of an elastomer is let into the seat (7) and has an annular sealing surface for co-operation with the second valve disk (8).

13. A valve according to claim 4, characterised in that retaining means with backlash are provided between the armature and the second valve disk.

## Revendications

1. Soupape à siège à trois voies, qui comprend une cage (1, 2) comportant trois passages (4, 5, 6) aboutissant à une chambre (3), la communication de deux passages (4, 5) avec la chambre (3) de la cage étant commandée par deux corps de soupape dont chacun coopère avec un siège (7, 10), des moyens étant prévus pour commander le déplacement des corps de soupape, ces moyens comprenant un organe réglant et un couplage avec jeu entre les corps de soupape, couplage par lequel, lorsque l'un des corps de soupape est en position d'ouverture, l'autre corps de soupape occupe une position de fermeture, caractérisée en ce que les corps de soupape sont formés de disques (8, 11), en ce qu'un unique premier disque (11) de soupape est relié de manière réglable à l'organe réglant et en ce que l'autre second disque (8) de soupape est déplaçable entre la position de fermeture et une position d'ouverture indépendamment du premier disque (11) de soupape, sous l'effet des pressions du fluide régnant dans la chambre (3) de la cage et dans les passages (4, 6), dès que le premier disque de soupape (11) se trouve en position de fermeture.

2. Soupape selon la revendication 1 à commande électromagnétique, dans laquelle l'organe réglant est formé d'une armature ferromagnétique (12) supportant le premier disque de soupape (11) et montée coulissante dans la cage de la soupape, caractérisée en ce que le second disque (8) de soupape comporte un trajet axial de guidage et en ce que les deux disques (8, 11) de soupape sont centrés sur l'axe de déplacement de l'armature aimantable (12).

3. Soupape selon la revendication 2, caractérisée en ce qu'un élément élastique (39) prenant appui contre la cage (1, 2) de la soupape est prévu pour contribuer au mouvement de fermeture du second disque (8) de soupape contre le siège (7).

4. Soupape selon la revendication 2, caractérisée en ce que le second disque (8) de soupape comporte une surface de glissement contre l'armature (12), de manière à obtenir un guidage axial du disque (8) de soupape dans l'armature.

5. Soupape selon la revendication 2, caractérisée en ce que le second disque (8) de soupape comporte une surface de glissement sur une surface de guidage de la cage.

6. Soupape selon la revendication 4, caractérisée en ce que l'armature (12) comporte sur un côté un trou cylindrique dans lequel une partie cylindrique du second disque (8) de soupape est guidée à coulissement.

7. Soupape selon la revendication 6, caractérisée en ce que le second disque (8) de soupape comporte un bord annulaire orienté vers un collet (23) de l'armature (12) et en ce qu'une douille de l'armature forme une cavité axiale, de manière que, lorsque le premier disque de soupape (11) est en position d'ouverture, le collet (23) prenne appui sur le bord annulaire du second disque (8) de soupape, afin de contraindre ce dernier à rester en position de fermeture.

8. Soupape selon la revendication 4 ou 5, dans laquelle un fluide gazeux est commandé par le premier disque (11) de soupape, ce fluide étant à une pression supérieure à celle qu'a le fluide commandé vers le second siège (8) de soupape, caractérisée en ce que le diamètre du siège (10) du premier disque (11) de soupape est plus petit que le diamètre du siège (7) du second disque (8) de soupape.

9. Soupape selon la revendication 8, caractérisée en ce que le passage (5) du fluide sous haute pression comprend un moyen (24) pour freiner le flux de ce fluide.

10. Soupape selon la revendication 2, caractérisée en ce qu'une membrane (31) d'élastomère est reliée à la cage de la soupape et présente une surface annulaire (33) entre le second disque (8) de soupape et son siège (7), cette surface étant facilement déplaçable en direction axiale et assurant l'étanchéité entre ce disque et ce siège.

11. Soupape selon la revendication 10, caractérisée en ce que le corps de soupape comprend une première partie de cage (28) qui comporte deux (4, 6) des trois passages et qui comporte l'organe de fixation (30) destiné à assembler cette partie de cage (28) avec deux autres parties de cage (27, 29) qui forment une gorge annulaire dans laquelle le bord de la membrane (31) est prisonnier, l'une (29) des parties de la cage supportant le siège (7) du second disque de soupape (11) et formant un appui pour les joints toriques (34, 35) de manière à étanchéifier chacun pour soi les deux passages (4, 6).

12. Soupape selon la revendication 2, caractérisée en ce qu'un joint saillant (38) d'élastomère est logé dans le siège (7) et présente une surface annulaire d'étanchéité au second disque (8) de soupape.

13. Soupape selon la revendication 4, caractérisée en ce que des organes de retenue avec jeu axial sont prévus entre l'armature et le second disque (8) de soupape.
